# DEMANDE DE BREVET EUROPEEN

(11) **EP 4 772 018 A1**
(43) Date de publication de la demande: **08.07.2026**
(21) Numéro de dépôt: 25227312.3
(22) Date de dépôt: 27.12.2025
(51) Int. Cl.: A01G 15/00, F03G 7/04

(54) **PROCÉDÉ DE CAPTAGE DE L'ÉNERGIE DE L'ENVIRONNEMENT ET DE SON RAYONNEMENT VERS L'ESPACE**

(30) Priorité: 01.01.2025 FR 2500001
(71) Demandeur: Phan Ngoc, Ngan, 1410 Waterloo (BE)
(72) Inventeur: Phan Ngoc, Ngan, 1410 Waterloo (BE)

(57) **Abrégé**

Procédé de captage de l'énergie de l'environnement et de sa séquestration définitive dans l'espace extra-atmosphérique pour combattre le réchauffement climatique caractérisé en ce qu'il comprend la mise en œuvre d'un ou plusieurs de postes de captage d'énergie solaire, éolienne et/ou hydraulique, et d'une pluralité d'installations industrielles de production de glace alimentées par l'énergie électrique produite par les postes de captage. Les serpentins des condenseurs individuels des installations industrielle de production de glace sont modifiés pour être placés à l'horizontale et orientés vers le ciel, pour rayonner les infrarouges émises par les serpentins vers l'espace extra-atmosphérique à des fins de séquestration définitive. Les postes de captage d'énergie refroidissent l'atmosphère grâce à cette séquestration définitive. De plus, la glace obtenue des installations industrielles sert à rafraichir les villes soumises à des vagues de chaleur. Le procédé est aussi capable de réguler la production énergétique du réseau électrique.

## Description

### Domaine technique de l'invention

L'invention se situe dans le domaine du Captage de l'Énergie de l'Environnement et de sa Séquestration Définitive dans l'Espace Extra-atmosphérique (CESE en abrégé dans ce document) afin de diminuer le contenu énergétique de l'environnement, donc de sa température, permettant ainsi de lutter contre le réchauffement climatique.

### Technique antérieure

Cette demande de brevet est une amélioration du brevet FR3120637B1 délivré le 28/07/2023, et dont le volet sur la séquestration d'énergie est à présent étendu à l'utilisation de l'espace extra-atmosphérique pour séquestrer définitivement l'énergie extraite de l'environnement. Dans cette demande de brevet « Séquestrer » signifie « mettre à part » (voir le dictionnaire de l'Académie Française 7^{ème} édition) l'énergie captée, la séquestrant dans l'espace extra-atmosphérique sans possibilité de retour. Cette séquestration s'effectue par le rayonnement vers l'espace extra-atmosphérique de l'énergie des infrarouges 8 - 13 µm, obtenus par captage de l'énergie de l'environnement.

Suivant l'invention détaillée dans le brevet FR3120637B1, pour séquestrer définitivement l'énergie extraite de l'environnement, la conversion électrolytique des chlorures en hydroxydes est utilisée. Dans le brevet FR3120637B1, « séquestrer » signifie donc mettre à part l'énergie dans les molécules stables d'hydroxydes sous forme d'énergie chimique, mais cela implique la disponibilité de chlorures sur site et la possibilité d'y stocker des hydroxydes.

La demande de brevet détaillée dans ce document présente une autre méthode de séquestration définitive de l'énergie, en l'occurrence le rayonnement vers l'espace extra-atmosphérique sans devoir passer par l'intermédiaire de produits chimiques, grâce au rayonnement d'infrarouges 8 - 13 µm en direction de l'espace extra-atmosphérique, à travers la fenêtre de transparence de l'atmosphère.

### Description des figures

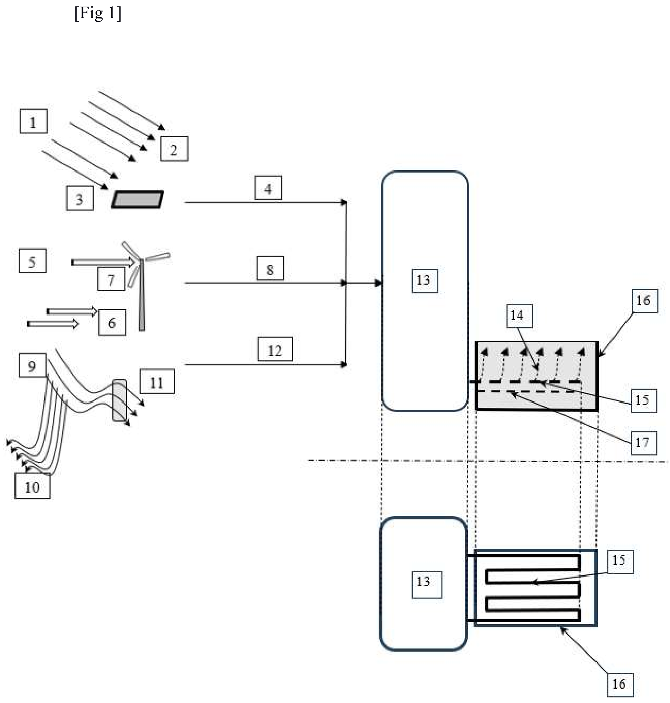

La [Fig. 1] montre le schéma du procédé de CESE (Captage de l'Énergie de l'Environnement et de sa Séquestration Définitive dans l'Espace Extra-atmosphérique). Ce schéma provient du même schéma figure 1 du brevet FR3120637B1 pour la partie captage de l'énergie solaire, éolienne et hydraulique, et production d'électricité renouvelable [Fig. 1, éléments (1) à (12)].

La description de cette partie de captage est reproduite ci-après : L'énergie solaire [Fig.1, (1)] est sous-exploitée car la majeure partie de l'énergie des photons [Fig.1, (2)] reçus du soleil est laissée libre et chauffe la partie de la terre éclairée. Seule une petite partie [Fig.1, (3)] de cette énergie est actuellement convertie en énergie électrique. Le procédé peut capter une quantité supplémentaire de cette énergie [Fig. 1, (4)] pour la séquestrer.

Similairement l'énergie éolienne [Fig. 1, (5)] est sous-employée car la majeure partie de cette énergie [Fig. 1, (6)] est laissée libre et relâche des calories dans l'environnement. Seule une petite partie [Fig. 1, (7)] de cette énergie est actuellement convertie en énergie électrique. Le procédé peut capter une quantité supplémentaire de cette énergie [Fig. 1, (8)] pour la séquestrer.

De même l'énergie hydraulique des chutes d'eau, des marées et des vagues [Fig. 1, (9)] est sous-employée car sa majeure partie, surtout celle des vagues, [Fig. 1, (10)] est laissée libre et relâche des calories à l'environnement. Seule une petite partie [Fig. 1, (11)] de cette énergie est actuellement convertie en énergie électrique. Le procédé peut capter une quantité supplémentaire de cette énergie [Fig. 1, (12)] pour la séquestrer.

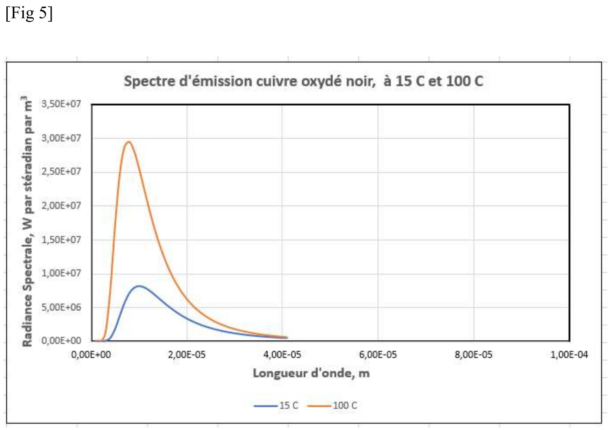

À la différence avec la figure 1 du brevet FR3120637B1, concernant le volet séquestration d'énergie, le procédé présenté dans cette demande préconise la conversion de l'énergie électrique renouvelable [Fig.1, éléments (4) (8) (12)] en énergie thermique par l'intermédiaire d'installations industrielles de production de glace [Fig.1, (13)] pour émettre, grâce aux serpentins [Fig.1, (15)] des condenseurs de ces installations, des rayons infrarouges thermiques qui sont en majorité des infrarouges 8 - 13 µm [Fig.1, (14)] et [Fig. 5] aux températures de service des serpentins, et qui sont rayonnés à la vitesse de la lumière vers l'espace extra-atmosphérique.

Lorsqu'ils sont émis par des serpentins noirs fonctionnant entre 45 °C à la sortie et 121 °C à l'entrée, ces infrarouges thermiques ont principalement des longueurs d'onde comprises entre 8 µm et 13 µm, similairement aux infrarouges du spectre d'émissions du corps noir aux mêmes températures de service, voir [Fig. 5] où deux températures moyennes, 15 °C et 100 °C, sont considérées.

121 °C est la température de service de décharge à laquelle les compresseurs industriels de réfrigération pour production de glace sont capables de fonctionner, et 45 °C est la température de service de sortie des serpentins lorsqu'ils sont encore capables de produire du froid après détente.

La terre est supposée rayonner les infrarouges à la température moyenne de 15 °C, en comparaison avec les 100 °C représentatifs des serpentins lorsqu'ils fonctionnent entre 45 °C et 121 °C. Faire fonctionner les serpentins entre 16 °C et 121 °C permettra donc de toujours rayonner plus que le rayonnement naturel moyen de la terre à travers la fenêtre de transparence de l'atmosphère.

Les infrarouges 8 - 13 µm peuvent se propager sans être absorbés par la vapeur d'eau, ni par le CO₂, ni par l'O₃ vers l'espace extra-atmosphérique froid, grâce à la fenêtre de transparence 8 - 13 µm de l'atmosphère.

Il suffit dès lors de modifier les serpentins de chaque installation industrielle de production de glace, afin qu'ensemble ces serpentins forment un plan horizontal [Fig. 1, (15)], placé à l'air libre, sans refroidissement forcé par air ni par eau, et exposé au ciel sans aucune entrave causée par des films, ou obstacles, favorisant ainsi le rayonnement à la vitesse de la lumière des infrarouges 8 - 13 µm vers l'espace extra-atmosphérique.

Pour ce qui est des infrarouges hors de la fourchette 8 - 13 µm, comme leur énergie provient initialement de l'atmosphère via le captage de l'énergie du procédé, leur rayonnement vers leur source d'origine est énergétiquement neutre pour l'environnement.

En cas de présence de gouttelettes d'eau liquide ou cristaux de glace dans l'atmosphère, par exemple en cas de ciel nuageux, de pluie ou de neige, les infrarouges 8 - 13 µm inter-réagiront avec l'eau et/ou la neige pour rayonner des infrarouges dans toutes les directions soit 50 % vers l'espace extra-atmosphérique. Par n'importe que temps, de jour et de nuit, le rayonnement de l'énergie vers l'espace extra-atmosphérique sera donc toujours possible.

Une plaque d'aluminium réfléchissante [Fig. 1, (17)] est aussi placée en dessous des serpentins [Fig.1, (15)] de chaque condenseur afin de maximiser le rayonnement des infrarouges 8 - 13 µm vers l'espace extra-atmosphérique, le jour comme la nuit.

Les serpentins [Fig.1, (15)] de chaque condenseur sont aussi placés derrière au moins quatre murs verticaux opaques [Fig.1, (16)], afin qu'ils soient à l'abris du soleil le jour pour permettre un fonctionnement normal de chaque condenseur, ainsi qu'à l'abris des courants d'air le jour et la nuit pour limiter les échanges énergétiques par convection forcée entre les serpentins et l'air ambiant. Le rayonnement de l'énergie thermique 8 - 13 µm vers l'espace extra-atmosphérique est donc privilégié afin d'y séquestrer au maximum et quasi instantanément l'énergie extraite de l'environnement.

La [Fig. 1] comporte aussi une vue en plan des éléments [Fig.1, (13) (15)(16)] dans sa partie inférieure droite.

La conversion de l'énergie électrique [Fig. 1, éléments (4) (8) (12)] en énergie infrarouge s'effectue par les installations industrielles de production de glace [Fig. 1, (13)] dont les serpentins des condenseurs ]Fig.1, (15)] servent d'émetteurs d'infrarouges thermiques (14).

L'ensemble du procédé de CESE comprend donc :
- Un ou plusieurs poste(s) de captage d'énergie ci-après :
   - Captage d'énergie solaire [Fig.1, (3)]
   - Captage d'énergie éolienne [Fig.1, (7)]
   - Captage d'énergie hydraulique [Fig.1, (11)]
- Une pluralité d'installations industrielles de production de glace [Fig.1, (13)] alimentées par l'énergie électrique [Fig.1, (4) (8) (12)] produite par les postes de captage précités, avec leurs serpentins noirs [Fig. 1, (15)] des condenseurs modifiés pour être placés dans un plan horizontal à l'air libre, un plan horizontal par installation industrielle de production de glace, sans refroidissement forcé par air ni par eau, exposant lesdits serpentins directement au ciel sans aucune entrave causée par des films, ou obstacles, afin de faciliter le rayonnement d'infrarouges de longueur d'onde comprise entre 8 µm et 13 µm vers l'espace extra-atmosphérique, et fonctionnant à une température de service comprise entre 16 °C et 121 °C, ou de préférence entre 45 °C et 121 °C. Une plaque d'aluminium réfléchissante [Fig.1, (17)] est placée en dessous de chaque plan horizontal desdits serpentins [Fig.1, (15)]. Chacun des plans horizontaux de serpentins est placé derrière au moins quatre murs verticaux opaques [Fig. 1, (16)].

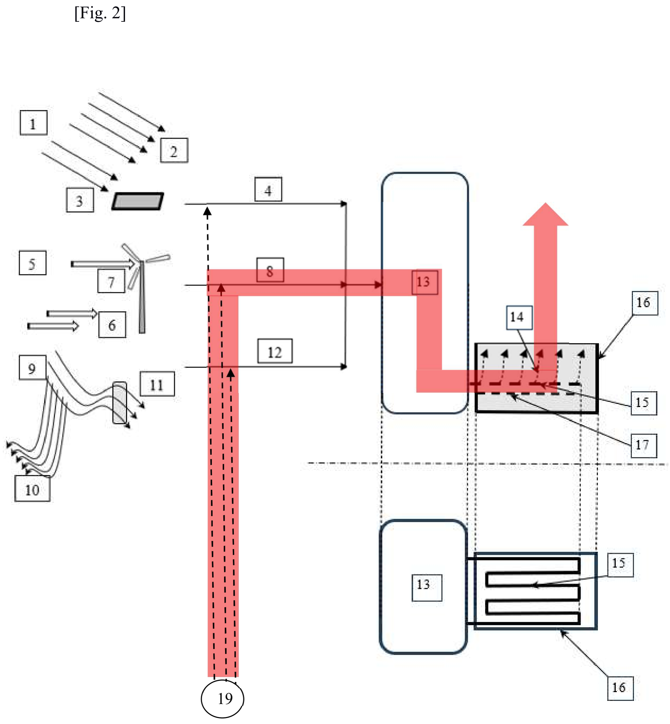

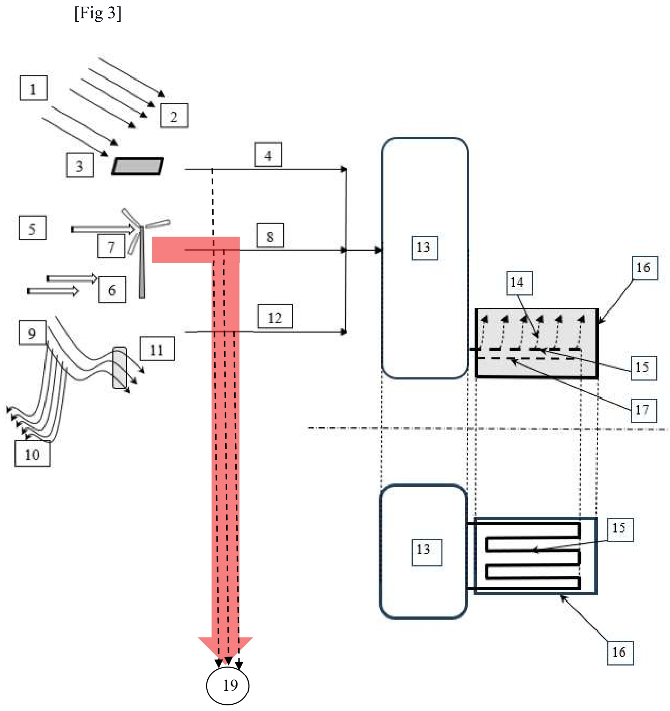

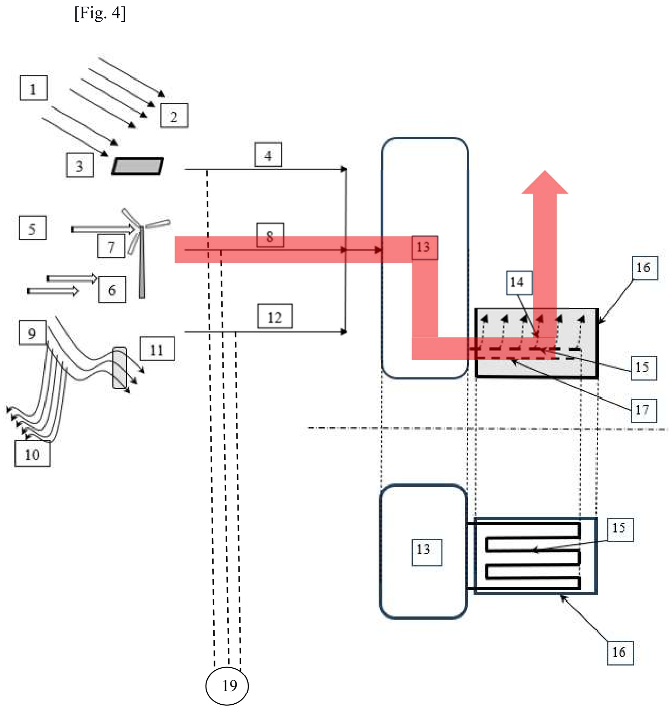

Les [Fig. 2], [Fig. 3] et [Fig. 4] montrent l'inter-réaction des installations utilisant le procédé de CESE avec le réseau électrique [Fig. 2, Fig. 3 et Fig.4, élément (19)], dans leur capacité de régulation de la production électrique du réseau, et servant l'objectif de lutter contre le réchauffement climatique.

La [Fig. 2] montre comment la faculté des installations utilisant le procédé de CESE de recevoir l'énergie excédentaire venant du réseau électrique est exploitée pour lutter contre le réchauffement climatique. Cet excédent énergétique est envoyé vers une pluralité d'installations utilisant le procédé de CESE, avec le flux énergétique partant du réseau électrique [Fig. 2, (19)] vers les serpentins [Fig. 2, (15)], siège de production d'infrarouges 8 - 13 µm, ces derniers étant rayonnés vers l'espace extra-atmosphérique, aidant ainsi à refroidir l'atmosphère via la réduction du déséquilibre énergétique au sommet de l'atmosphère,

La [Fig. 3] montre comment la capacité de fournir de l'électricité renouvelable par des installations utilisant le procédé de CESE, est mise à profit, avec lesdites installations exploitée pour alimenter le réseau en situation de déficit énergétique, le flux énergétique ayant le trajet : des sources d'électricité renouvelable [[Fig. 3, (4), (8), (12)] vers le réseau [Fig.3 (9)], évitant ainsi à ce dernier de recourir aux sources d'appoint venant des centrales thermiques, nucléaires ou géothermiques, ce qui aide à lutter contre le réchauffement climatique. Lesdites installations utilisant le procédé de CESE sont préalablement construite de façon dispersée géographiquement à travers pays et continents afin d'annuler les risques d'indisponibilité d'énergie venant des sources d'énergie renouvelables [Fig. 1, (1) (2) (3) (5) (6) (7) (9) (10) (11)].

La [Fig. 4] montre le fonctionnement normal avec le réseau électrique sans excédent ni déficit énergétique. Les installations utilisant le procédé de CESE [Fig. 4, voir flux énergétique en rouge, des sources d'énergies renouvelables vers le rayonnement vers l'espace extra-atmosphérique] sont dans leur configuration de fonctionnement normal avec leurs propres énergies renouvelables converties en infrarouges 8 - 13 µm pour être rayonnées vers l'espace extra-atmosphérique.

La [Fig. 5] montre les spectres d'émission des serpentins noirs pour deux températures de service, une à 100 °C et l'autre à 15 °C, qui est la température moyenne de la surface de la terre considérée par le GIEC pour le rayonnement des infrarouges. On voit qu'à 100 °C les serpentins noirs émettent plus d'énergie.

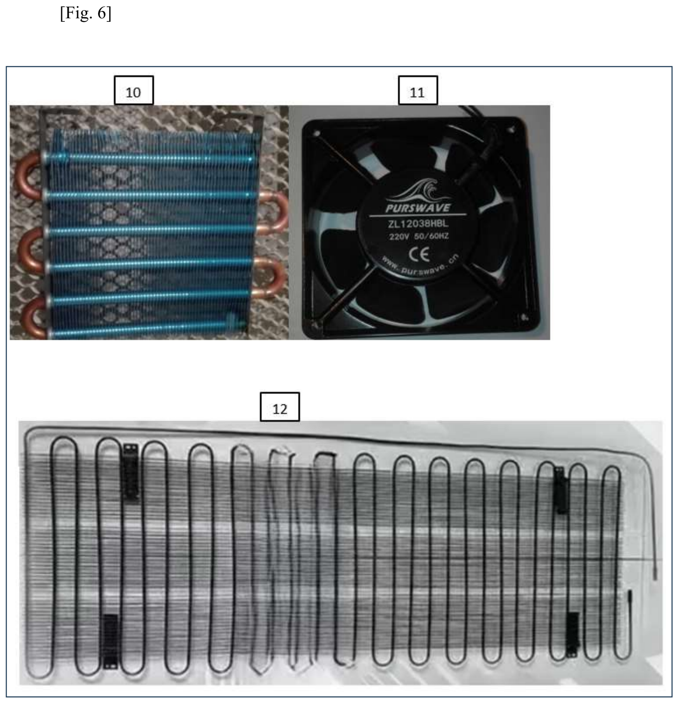

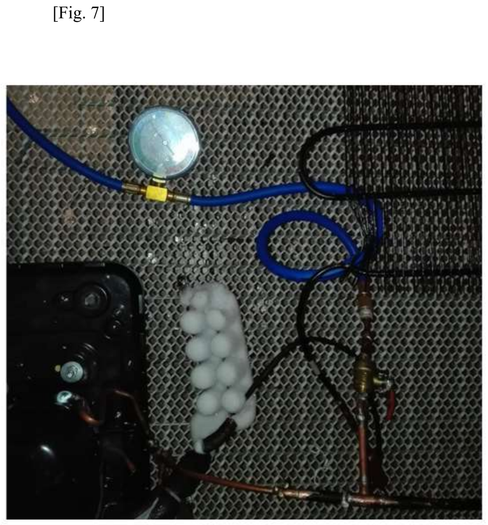

La [Fig. 6] illustre la manipulation faite dans l'Exemple 3, et montre le condenseur [Fig. 6, (10)] et ventilateur d'origine [Fig. 6, (11)] d'une unité capable de produire de la glace d'origine PURSWAVE Série 52W-R600a 220V, à convection forcée ont été modifiés pour démontrer que le refroidissement par convection naturelle pour produire de la glace très rapidement est faisable. En les remplaçant par une plus grande boucle de serpentins noirs [Fig. 6, (12)], de la glace peut être rapidement obtenue, voir [Fig. 7] ci-après.

La [Fig. 7] montre la glace obtenue suite à l'utilisation d'une simple grande boucle de serpentins noirs sans circulation forcée d'air. La mise en marche de l'unité de production de glace durant 15 mn, après l'enlèvement du condenseur et de son ventilateur d'origine, et le raccordement de la relativement grande boucle de serpentins noirs, suffisait à recouvrir l'évaporateur exposé à l'air libre de givre, puis de glace dans l'heure qui suit lorsque l'eau fut vaporisée sur l'évaporateur.

### Description détaillée de l'invention

Cette demande de brevet détaille un procédé de Captage de l'Énergie de l'Environnement et de sa Séquestration Définitive dans l'Espace Extra-atmosphérique (CESE). Il est une amélioration du procédé de captage et de séquestration dans des hydroxydes décrit dans le brevet FR3120637B1. Ici ce captage de l'énergie s'effectue aussi par l'utilisation de panneaux solaires, turbines éoliennes et/ou turbines hydrauliques, mais la séquestration se fait dans l'espace extra-atmosphérique, par rayonnement d'Infra-rouges 8 - 13 µm à travers la fenêtre de transparence de l'atmosphère vers l'espace extra-atmosphérique.

L'énergie électrique obtenue du captage alimente une pluralité d'installations industrielles [Fig. 1, (13)] de production de glace, production qui rejette alors de l'énergie thermique [Fig. 1, (14)] via les serpentins noirs [Fig. 1, (15)] des condenseurs des installations industrielles de production de glace.

Comme ces serpentins ont une température de service plus élevée que la température ambiante, ils rayonnent plus d'infrarouges 8 - 13 µm par m² que le rayonnement naturel du système Terre-atmosphère auquel le document Thollot Patrick et al : « Rayonnement, opacité et effet de serre - Planet-Terre », 3 juin 2021 se réfère (« la surface de la Terre est à 15°C de moyenne et se comporte comme un corps noir », suivant Thollot et. al.). Pour ce qui est des infrarouges hors de la fourchette 8 - 13 µm, comme leur énergie provient initialement de l'environnement, les rayonner avec les serpentins de retour vers ce même environnement n'augmente pas le contenu énergétique de l'environnement.

L'énergie en provenance de l'environnement est donc transformée en énergie infrarouge 8 - 13 µm, et si cette dernière est séquestrée définitivement, le contenu énergétique de l'environnement aura décru entrainant localement un refroidissement de l'atmosphère. C'est une loi de la thermodynamique qu'un système à pression constante verra sa température diminuer si son contenu énergétique décroît.

Effectivement, l'exemple 1 du brevet FR3120637B1 montre que lorsque qu'un système reçoit de l'énergie de l'extérieur il s'échauffe, et si cette énergie est en partie transformée en énergie chimique, l'échauffement du système sera plus lent et moins important, à condition que cette énergie chimique reste définitivement séquestrée. Cet exemple est reproduit ci-après dans ce document (cf. Exemple 1). Ici, avec le procédé amélioré, les énergies renouvelables chauffant l'environnement sont transformées en énergie thermique pour être séquestrée dans l'espace extra-atmosphérique.

Pour combattre le réchauffement climatique rien n'est plus simple que de refroidir l'atmosphère. Pour ce faire, le procédé de CESE séquestre définitivement l'énergie [Fig. 1, (14)] émise par les serpentins en rayonnant à la vitesse de la lumière des infrarouges 8 - 13 µm vers l'espace extra-atmosphérique. Cela s'effectue naturellement la nuit grâce à la transparence de l'atmosphère vis-à-vis des infrarouges 8 - 13 µm, avec les serpentins placés à l'horizontale et orientés vers le ciel.

Le jour, à cause de l'ensoleillement, les serpentins noirs peuvent s'échauffer plus par le soleil que par l'effet de compression, et cela empêche le fonctionnement normal des installations industrielles de production de glace. Pour y remédier, on place ces serpentins à l'ombre, les mettant à l'abris des rayons solaires visibles et ultraviolets derrière au moins 4 murs opaques verticaux [Fig. 1, (16)].

La production de glace est un bénéfice que procure le procédé de CESE, et est recherchée pour refroidir les villes en cas de canicule urbaine, ou pour refroidir l'environnement tout simplement. La glace obtenue des installations industrielles de production de glace [Fig. 1, (13)] est utilisée en permanence pour refroidir l'environnement, avec l'eau de fonte de ladite glace recyclée à travers les installations industrielles de production de glace.

Ces murs opaques verticaux servent aussi à limiter le passage du vent sur les serpentins afin de limiter le transfert par convection forcée de l'énergie thermique, le transfert de l'énergie rayonnée vers l'espace extra-atmosphérique devant être privilégié pour séquestrer le plus possible l'énergie extraite de l'environnement. Le passage d'une convection forcée par air avec un coefficient d'échange thermique typique de 100 W/m² à un échange par convection naturelle par air avec un coefficient d'échange thermique typique de 15 W/m² ne nécessite qu'une augmentation de la surface des serpentins d'un facteur de 100/15 = 7, ce qui est tout à fait faisable. Même si on devait augmenter cette surface d'un facteur de 70, les surfaces inoccupées sur terre et océans sont largement disponibles pour travailler uniquement par convection naturelle et par rayonnement d'infrarouges 8 - 13 µm, voir [0046].

La puissance énergétique à envoyer vers l'espace extra-atmosphérique est fixée par les charges thermiques transmises par les compresseurs des installations de production de glace vers les serpentins.

La surface des serpentins est alors dimensionnée pour permettre le rayonnement de ces charges thermiques vers l'espace extra-atmosphérique, compte tenu de la transmittance atmosphérique aux les infrarouges 8 - 13 µm.

Cette transmittance est proche de 1 lorsque l'humidité relative est inférieure à 1 %. Par contre, en cas de présence d'eau liquide et/ou solide dans l'air, la transmittance atmosphérique diminue, mais l'énergie thermique émise par les serpentins continuera d'être transmise vers l'espace extra-atmosphérique, à moindre puissance certes, mais il sera toujours possible de séquestrer, même si ce n'est que partiellement, l'énergie émise par les serpentins jour et nuit, par temps sec ou humide.

Le déséquilibre énergétique au sommet de l'atmosphère qui est responsable du réchauffement (0,79 W/m² suivant le 6^{ème} rapport du groupe de travail 1 du Groupe d'Experts Intergouvernemental sur l'Évolution du Climat (GIEC) étant relativement faible, l'espace requis pour mettre en place les serpentins capables de rayonner et annuler ce déséquilibre est faible comparé à la superficie totale des déserts et des océans.

Si suffisamment d'espaces offshore ou d'espaces pris sur les déserts sont réservés au placement des serpentins, il sera toujours possible d'accommoder la puissance relativement faible de l'énergie rayonnée, qui est typiquement de 100 W/m² - ou moins lorsque l'humidité relative de l'air est proche de 100 %. Comme la séquestration définitive l'énergie extraite de l'environnement est une opération précieuse en raison de l'urgence climatique, il est justifié d'utiliser les grands espaces vides des océans et des déserts pour séquestrer le plus possible l'énergie captée de l'atmosphère chaud.

L'utilisation des serpentins est nécessaire pour rayonner à une température de service plus élevée que la température ambiante, contrastant avec le rayonnement thermique naturel de l'environnement. Ce fonctionnement à une température de service plus élevée peut permettre effectivement de rayonner 3 fois plus d'énergie infrarouge 8 - 13 µm que le rayonnement naturel.

En effet les spectres d'émission montrent que passer de 15 °C (température de rayonnement à la surface de la terre) à 100 °C conduit à une augmentation de l'ordre de 3 (voir [Fig. 5]) le rayonnement 8 - 13 µm à travers la fenêtre atmosphérique.

Un rayonnement élevé permet de compenser plus facilement le déséquilibre de flux énergétiques au sommet de l'atmosphère, déséquilibre qui est de 0,79 W par m² de surface de la terre suivant le 6^{ème} rapport d'évaluation du GIEC, Groupe de Travail 1, Section 7 Page 925.

Partant des 40 W/m² de rayonnement à travers la fenêtre atmosphérique rapporté en 2009 pour le rayonnement infrarouge naturel issu de la surface de la terre, voir "Earth's Global Energy Budget", Trenberth et al., 2009, BAMS, Figure 1, on peut interpoler pour obtenir l'espace requis au placement des serpentins noirs : 0,79 / (40 x 3) = 0,66 % de la surface la terre, à quoi il faut aussi ajouter l'espace réservé à la production d'énergie. C'est de toute façon beaucoup moins que la surface totale des déserts, qui est d'un tiers des surfaces des continents.

Il existe des films, panneaux et peintures réfléchissants les rayon solaires et transparents aux infrarouges 8 - 13 µm qui sont capables de d'abaisser la température des équipements qu'ils recouvrent de façon à obtenir une température d'équipement de quelques degrés en dessous de la température ambiante en plein soleil. Cette fonction n'est pas recherchée pour le procédé de CESE car la température des serpentins est fixée par les flux énergétiques venant de l'intérieur, et comme il faut éviter de freiner le rayonnement des infrarouges thermiques venant de l'intérieur, c'est l'option sans film ni recouvrement qui a été adoptée pour le procédé de CESE.

Depuis la publication du brevet FR3120637B1, des relevés récents de températures de l'air en amont et en aval des champs éoliens en cours d'exploitation ont été rendues publiques. Ces données montrent que malgré la quantité importante d'énergie que le soleil envoie vers la terre, la seule conversion de l'énergie cinétique de l'air en électricité peut déjà aider à refroidir localement le débit d'air à la sortie d'un champ éolien.

Par exemple, au champ éolien de Shangyi, province de Hebei, Chine (voir « Local climatic and environmental effects of an onshore wind farm in North China », Agricultural and Forest Meteorology 308-309 (2021) 108607), en tenant compte de la direction du vent et des positions des capteurs de température, on a effectué des relevés de températures avant la construction du champ et à la mise en service initial des turbines. Il a été confirmé que la température l'air au milieu du champ diminue en un échelon à la mise en service du champ éolien, voir Figure 3, courbe (Ta, ° C) du document.

Ce champ éolien de Shangyi, qui est situé près de la ville du même nom, était affecté par l'effet thermique de l'îlot urbain, et par l'expansion urbaine. Il a été montré qu'avant la construction du champ, la température de l'air à son emplacement augmentait lentement en raison du réchauffement climatique, de l'effet thermique de l'îlot urbain et de son expansion, mais aussi en raison de la diminution de la vitesse des vents dominants froids venant du NNO (voir températures de l'air aux Figures 3, 4 et 5 de la référence sur Shangyi).

Au démarrage initial après construction du champ, les températures de l'air ont décru en un échelon, pour ensuite remonter lentement à cause du réchauffement climatique, de l'effet thermique de l'îlot urbain, et l'expansion de l'urbanisation (voir températures de l'air aux Figures 3 et 5 de la référence sur Shangyi).

Il n'y a pas eu de refroidissement régional de l'air parce que l'énergie électrique produite était utilisée pour l'industrie et pour le chauffage domestique. Ces usages industriels et domestiques renvoyaient l'énergie captée vers l'environnement, annulant de ce fait le refroidissement initialement enregistré à la sortie de champ éolien.

Tout aurait pu être différent si l'énergie électrique était définitivement séquestrée par rayonnement d'infrarouges 8 - 13 µm vers l'espace extra-atmosphérique.

Ces relevés ont aussi confirmé ce qui avait été rapporté pour le champ éolien de San Gorgonio, Californie, US (voir l'article « Impacts of wind farms on surface air temperatures », Proceedings of the National Academy of Sciences, August 13, 2010). Avec la direction du vent et les positions des capteurs de température prises en compte, il a été montré qu'en aval du champ, la température de l'air était plus basse que celle en amont, excepté pour la période entre 0 hr et 7 hr. L'écart de température de l'air en aval par rapport à celle en amont était faible durant la nuit, et s'est inversé entre 0 hr et 7 hr lorsque le sol s'était refroidit après avoir rayonné son énergie vers l'espace extra-atmosphérique.

La nuit à l'entrée du champ éolien, la température de l'air au niveau de l'axe du rotor de turbine était affectée par la température froide du sol. Mais à la sortie du champ, en raison du brassage avec l'air plus chaud se trouvant au-dessus de la turbine, la température de l'air au niveau de l'axe du rotor était un peu plus élevée que celle à l'entrée du champ. Par contre le jour à 13 hr, la température de l'air à la sortie du champ était 3,5 °C plus basse que celle à l'entrée.

Sur une base journalière, l'air en aval du champ était donc plus frais que l'air en amont. L'énergie cinétique de l'air après passage à travers les turbines éoliennes était réduite après la conversion de l'énergie cinétique en électricité, causant une réduction de la moyenne journalière de la température de l'air à la sortie du champ éolien, ce qui a été confirmé par les relevées faites à Shangyi.

Notons aussi qu'il existe de nombreux articles décrivant des simulations climatiques incluant la modélisation l'impact des champ éoliens, mais qui n'ont pas confirmé les relevés de Shangyi et de San Gorgonio. Dans ces articles, nous n'avons par contre trouvé aucune modélisation de l'utilisation faite de l'électricité produite (voir par exemple l'article « Potential climatic impacts and re-liability of very large-scale wind farms », Atmos. Chem. Phys., 10, 2053-2061, 2010 - L'auteur nous a confirmé qu'il avait été considéré que l'utilisation de l'énergie électrique était du ressort du gestionnaire du réseau, et que cela n'avait pas été le sujet central de sa simulation).

Cependant, utiliser l'énergie électrique produite à proximité du champ, ou dans un site lointain, ou la séquestrer définitivement affecte de façon différente la température de l'air à la sortie des champs éoliens.

Également, il est à noter que les centrales de production d'électricité, qui sont des sources d'énergie, peuvent aussi affecter la température de l'environnement. Dans l'article « Long-term observation of global nuclear power plants thermal plumes using Landsat images and deep learning », Remote Sensing of Environment 295 (2023) 113707, 7.172 images d'infrarouges thermiques obtenus du satellite Landsat ont été analysées, et les auteurs ont trouvé que les centrales nucléaires du monde en moyenne faisaient monter de 4,8°C la température des surfaces aquatiques où elles rejetaient les calories en provenance de leurs combustibles.

À puissance similaire, les puits d'énergie utilisant le procédé de captage et de séquestration d'énergie sont alors aussi capables d'abaisser localement la température régionale d'une amplitude similaire, si suffisamment d'espaces offshore ou pris sur les déserts leur sont consacrés.

Changer de façon importante la température régionale est donc possible malgré l'immensité de l'énergie envoyée par le soleil vers la terre. En fait suivant la National Oceanic and Atmospheric Administration (NOAA) américaine, la totalité de l'énergie reçue du soleil est réfléchie ou réémise vers l'espace extra-atmosphérique. Avant l'ère industrielle, l'homme vivait dans cet équilibre énergétique, mais durant la période qui s'en suit l'homme extrayait, et extrait encore du sous-sol charbon, pétrole, gaz, uranium et vapeur géothermique pour, après usage relâcher des calories dans l'environnement. Comme les besoins énergétiques de l'homme ne cessent de croître, et comme la boucle de rétroaction entre température entre teneurs de vapeur d'eau et de CO₂ est positive, on voit que la température et la concentration de vapeur d'eau et de CO₂ dans l'atmosphère ne cessent d'augmenter. Pour casser cette spirale divergente, refroidir l'atmosphère est une solution qui aidera à forcer la vapeur d'eau à se condenser, le CO₂ à passer dans les gouttelettes d'eau, eaux des mers, océans et terres humides, et réchauffement climatique à se ralentir et s'arrêter.

En plus du refroidissement local obtenu par la seule conversion de l'énergie cinétique de l'air, l'énergie solaire et hydraulique en électricité (dont l'énergie est ensuite séquestrée), le procédé de CESE offre un avantage supplémentaire par l'utilisation de la glace obtenue pour rafraichir les villes souffrant des vagues de chaleur, pour abaisser la température ambiante dans les places publiques et habitations, et pour éliminer les installations d'air conditionné qui rejettent de la chaleur dans l'environnement.

Dans les circonstances où il faut économiser l'eau en cas de canicule, la glace obtenue des installations industrielles de production de glace [Fig. 1, (13)] est utilisée en permanence pour refroidir l'environnement, avec l'eau de fonte de ladite glace recyclée à travers les installations industrielles de production de glace pour perpétuer le refroidissement de l'environnement.

Hors des situations de canicule, et de restriction d'usage d'eau, la glace obtenue peut être utilisée pour reconstituer les glaciers en cours de disparition.

Remarquons aussi que le refroidissement de la masse totale de l'air atmosphérique à une vitesse de 0,11 °C/décennie ne requiert que seulement 1,8 TW de puissance de refroidissement, en supposant que la masse de l'atmosphère est de 5,15×10¹⁸ kg, et que la capacité thermique spécifique Cp de l'air est de 1 kJ/kg °C. Les énergies éoliennes, solaires et hydrauliques disponibles sont donc largement suffisantes pour refroidir rapidement l'atmosphère.

Remarquons finalement qu'il est avantageux d'exploiter la capacité de refroidissement du procédé de CESE pour utiliser l'excédent énergétique du réseau électrique en cas de surproduction afin de lutter contre le réchauffement climatique.

En effet cet excédent énergétique du réseau électrique peut être envoyé vers une pluralité d'installations utilisant le procédé de CESE, avec le flux énergétique partant du réseau électrique [Fig. 2, (19)] vers les serpentins [Fig. 2, (15)], siège de production d'infrarouges 8 - 13 µm. Ces infrarouges sont rayonnés vers l'espace extra-atmosphérique, aidant ainsi à refroidir l'atmosphère via la réduction du déséquilibre énergétique au sommet de l'atmosphère, et avec le froid produit par les installations industrielles de production de glace compensant la production d'infrarouge hors de la fourchette 8 - 13 µm. Bien sûr, lesdites installations utilisant le procédé de CESE auront été préalablement construites avec la capacité de leurs installations industrielles de production de glace augmentée en raison de l'excédent énergétique à traiter.

En situation de déficit énergétique du réseau électrique, au lieu d'alimenter les installations industrielles de productions de glaces, les sources d'électricité renouvelable [Fig. 3, (4) (8) (12)] fournissent le réseau en électricité avec le flux énergétique partant des dites sources vers le réseau électrique [Fig.3 (9)], évitant à ce dernier de recourir aux sources d'appoint venant des centrales thermiques, nucléaires ou géothermiques, ce qui aide à lutter contre le réchauffement climatique. Lesdites installations utilisant le procédé de CESE auront été construites de façon dispersée géographiquement à travers pays et continents afin d'annuler les risques d'indisponibilité simultanée d'énergie venant des sources d'énergie renouvelables [Fig. 1, (1) (2) (3) (5) (6) (7) (9) (10) (11)].

En cas de fonctionnement normal du réseau électrique sans excédent ni déficit énergétique, les installations utilisant le procédé de CESE [Fig. 4, voir flux énergétique en rouge, des sources d'énergies renouvelables vers le rayonnement vers l'espace extra-atmosphérique] sont restaurées dans leur configuration de fonctionnement normal avec leurs propres énergies renouvelables converties en infrarouges 8 - 13 µm pour être rayonnées vers l'espace extra-atmosphérique.

Les installations utilisant le procédé de CESE remplacent donc avantageusement les dispositifs de stockage de longue durée d'énergie, car elles ne relâchent pas l'énergie préalablement séquestrée vers l'environnement, et de ce fait ne présentent pas de limitations en termes de durées de stockage d'énergie reçue du réseau, ni de durée de fourniture d'énergie vers le réseau.

C'est cette absence de relâchement d'énergie séquestrée qui les différentie des dispositifs de stockage de longue durée d'énergie actuels. Ces derniers fonctionnent sur le principe d'emmagasinage suivi de relâchement d'énergie pour servir le réseau électrique, et c'est la nécessité de relâcher l'énergie préalablement emmagasinée qui limite leur durée d'emmagasinage et de restitution d'énergie.

Les installations utilisant le procédé de CESE sont capables de recevoir autant d'excédent énergétique que le réseau nécessite de leur envoyer, car leur capacité de rayonner vers l'espace extra-atmosphérique des infrarouges 8 - 13 µm est sans limite. Également, la capacité de compenser, par la production de froid et de glace, le rayonnement vers l'environnement des infrarouges hors de la fourchette 8 - 13 µm, est aussi sans limitation en durée.

Les installations utilisant le procédé de CESE sont construites de façon dispersée géographiquement pour lutter contre le réchauffement climatique. Elles sont ainsi capables d'alimenter le réseau en énergies renouvelables de façon sûre du fait de la redondance et la diversité de leurs sources d'énergies solaires, éoliennes et hydrauliques : il est très improbable que simultanément ces sources ne viennent à tarir partout en même temps, et en coïncidence avec un déficit énergétique du réseau. Il n'y a pas de limitation dans la durée de fourniture d'énergie au réseau en déficit énergétique.

La [Fig. 5] illustre l'avantage du rayonnement des infrarouge 8 - 13 µm par des serpentins fonctionnant à 100 °C, car la quantité d'énergie infrarouge 8 - 13 µm rayonnée est plus élevée qu'opérant à 15 °C, qui est la température moyenne de la surface de la terre.

**Exemple 1** - Dans un bécher contenant 1200 ml d'eau on plonge une chaufferette électrique alimentée avec un courant continu de 28,4 V de tension et 0,52 A d'intensité. Partant de 12°C de température ambiante au temps t=0 mn, la température de l'eau atteint 30° C en 187 mn :

| Temps (mn) | Température (°C) |
|---|---|
| 0 | 12 |
| 13 | 15 |
| 32 | 18 |
| 60 | 22 |
| 93 | 25 |
| 187 | 30 |

Dans ce même bécher contenant 1200 ml d'eau, on plonge une paire d'électrodes en titane de dimensions 100 mm x 100 mm, avec un écartement ajustable de 1 mm à 50 mm entre électrodes pour fonctionner avec une alimentation en courant continu de 28,4 V mais avec une intensité de 0,56 A légèrement supérieure que celle du cas précédent. Partant 12 °C de température ambiante au temps t=0 mn, la température de l'eau n'atteint que 26,5 °C après 199 mn d'opération. Il n'est pas possible d'atteindre 30 °C même après 4 hr d'électrolyse :

| Temps (mn) | Température (°C) |
|---|---|
| 0 | 12 |
| 19 | 16 |
| 62 | 22 |
| 92 | 24 |
| 199 | 26,5 |

Sans électrolyse le milieu s'échauffe donc plus vite et atteint un palier de température plus élevé. Avec électrolyse une partie importante de l'énergie injectée est convertie en énergie chimique, rendant le réchauffement plus lent et la température finale atteinte est plus faible.

**Exemple 2** - Un frigo Electrolux TRS2400 de dimensions hauteur 1680 mm x largeur 910 mm x et profondeur 830 mm était disponible pour les essais. Sa puissance nominale était de 175 W, et il possédait une nappe verticale de serpentins du condenseur fixée à l'arrière. La nappe avait comme dimensions hauteur 1280 mm x largeur 860 mm, et possédait une flexibilité relativement élevée. Ce frigo a servi pour les essais de refroidissement par rayonnement d'infrarouges 8 - 13 µm décrit ci-après.

Sur une terrasse et sous un ciel nocturne dégagé, le frigo était dans sa position normale, c'est-à-dire adossé au mur pour favoriser la convection naturelle de l'air montant le long des serpentins. Après avoir été totalement décongelé, il a été mis en fonctionnement la nuit avec 3 bouteilles d'eau (de 1,5 l chacune, et non fermées hermétiquement) placées dans son compartiment de congélation. Après 6 heures de fonctionnement, les 3 bouteilles n'étaient que partiellement congelées. Le rayonnement thermique des infrarouges émis par les serpentins ayant contribué au réchauffement de l'air ambiant, la congélation nocturne était relativement lente.

Le frigo a été ensuite déplacé afin de pouvoir détacher la nappe de serpentins. En dévissant toutes les attaches vissées au dos de l'appareil, on a pu rabattre la nappe de serpentins pour la mettre à l'horizontale et la maintenir dans cette position durant l'essai de la nuit suivante, après décongélation totale du frigo et de son contenu. Une plaque en aluminium réfléchissante était aussi placée sous les serpentins afin de rayonner tous les infrarouges 8 - 13 µm à travers la fenêtre de transparence de l'atmosphère.

Avec la nappe de serpentins communicant pleinement avec l'espace extra-atmosphérique froid, après 5 heures de fonctionnement les 3 bouteilles d'eau étaient totalement congelées.

Le fait de favoriser le rayonnement des infrarouges 8 - 13 µm vers l'espace extra-atmosphérique froid (-270 °C) grâce à la fenêtre de transparence de l'atmosphère, on a donc pu obtenir une congélation nocturne plus efficace.

Notons aussi que le jour, avec le soleil tapant sur les serpentins noirs horizontaux, le condenseur ne fonctionnait plus correctement, et il fallait protéger les serpentins du rayonnement solaire avec des panneaux verticaux opaques placés autour de la nappe de serpentins pour que le frigo puisse congeler les bouteilles.

**Exemple 3** - Une unité capable de produire de la glace d'origine PURSWAVE Série 52W-R600a 220V, à convection forcée a été modifiée pour démontrer que le refroidissement par une simple grande boucle de serpentins noirs à refroidissement par convection naturelle est quelque chose de tout à fait faisable, si l'on cherche à rayonner le plus d'infrarouges 8 - 13 µm possible émis par serpentins, au lieu de disperser leur énergie à tout vent par convection forcée, comme cela se fait avec les installations industrielles de production de glace actuelles. Ensemble, les serpentins d'origine [Fig. 6, (10)] avaient comme dimension 16 cm x 12 cm, et comme diamètre extérieur de tube 0,7 cm. Le ventilateur d'origine ZL12038HBL 220V 50/60 Hz [Fig. 6, (11)] avait comme puissance 22 W, et 12 cm x 12 cm comme dimensions. Après avoir vidé le circuit de son réfrigérant, le condenseur et son ventilateur ont été découpés et remplacés par une relativement grande boucle de serpentins noirs fabriquée par RETEK, l'ensemble faisant une nappe de 120 cm x 43 cm et 0,6 cm comme diamètre de tube. Le circuit de réfrigérant a été rerempli de réfrigérant FrostMeister R134a vendu par Amazon, et la remise en marche de l'unité durant 15 mn suffisait à recouvrir l'évaporateur exposé à l'air libre de givre, puis de glace dans l'heure qui suit lorsque l'eau fut vaporisée sous forme de brouillard sur l'évaporateur, voir [Fig. 7].

## Revendications

1. Procédé de Captage de l'Énergie de l'Environnement et de sa Séquestration Définitive dans l'Espace Extra-atmosphérique (CESE en abrégé pour la suite) comprenant les équipements suivants, lesquels sont configurés pour capter l'énergie de l'environnement et rayonner à la vitesse de la lumière vers l'espace extra-atmosphérique les infrarouges 8 - 13 µm obtenus de cette énergie :
a. un ou plusieurs poste(s) de captage d'énergie ci-après :
·Captage d'énergie solaire [Fig. 1, (3)]
·Captage d'énergie éolienne [Fig.1, (7)]
·Captage d'énergie hydraulique [Fig. 1, (11)]
b. une pluralité d'installations industrielles de production de glace [Fig. 1, (13)] alimentées par l'énergie électrique [Fig. 1, (4) (8) (12)] produite par les postes de captage précités,
c. lesdites installations industrielles ayant leurs serpentins noirs de condenseur [Fig. 1, (15)] modifiés pour être placés dans un plan horizontal à l'air libre, respectant les conditions suivantes:
· un plan horizontal de serpentins [Fig. 1, (15)] par installation industrielle de production de glace [Fig. 1, (13)], sans refroidissement forcé par air ni par eau,
· exposant lesdits serpentins directement au ciel sans aucune entrave causée par des films, ou obstacles,
d. lesdits serpentins fonctionnant à une température de service comprise entre 16 °C et 121 °C, ou de préférence entre 45 °C et 121 °C,
e. avec une plaque d'aluminium réfléchissante [Fig.1, (17)] placée en dessous de chaque plan horizontal desdits serpentins [Fig.1, (15)],
f. chacun desdits plans horizontaux de serpentins [Fig. 1, (15)] étant placé derrière au moins quatre murs verticaux opaques [Fig. 1, (16)].

2. Procédé selon la revendication 1 par lequel, dans les circonstances où il faut économiser l'eau, et en cas de canicule :
a. la glace obtenue des installations industrielles de production de glace [Fig. 1, (13)] est utilisée en permanence pour refroidir l'environnement,
b. avec l'eau de fonte de ladite glace recyclée à travers les installations industrielles de production de glace [Fig. 1, (13)],
et dans les circonstances où l'eau est abondante, la glace obtenue des installations industrielles de production de glace [Fig. 1, (13)] est utilisée pour reconstituer les glaciers en cours de disparition.

3. Procédé selon la revendication 1 par lequel la faculté des installations utilisant le procédé de CESE à recevoir l'énergie excédentaire venant du réseau électrique est exploitée suivant la procédure suivante :
a. L'excédent énergétique du réseau électrique est envoyé vers une pluralité d'installations utilisant le procédé de CESE, avec le flux énergétique partant du réseau électrique [Fig. 2, (19)] vers les serpentins [Fig. 2, (15)], siège de production d'infrarouges 8 - 13 µm,
b. ces infrarouges sont rayonnés vers l'espace extra-atmosphérique,
c. lesdites installations utilisant le procédé de CESE étant préalablement construites avec la capacité de leurs installations industrielles de production de glace augmentée en raison de l'excédent énergétique à traiter,

4. Procédé selon la revendication 1 par lequel la faculté des installations utilisant le procédé de CESE à fournir de l'électricité renouvelable est mise à profit, avec lesdites installations exploitées suivant la procédure suivante :
a. En situation de déficit énergétique du réseau électrique, les sources d'électricité renouvelable [Fig. 3, (4), (8), (12)] fournissent le réseau en électricité avec le flux énergétique partant des dites sources [Fig. 3, (4), (8), (12)] vers le réseau électrique [Fig.3 (9)],
b. lesdites installations utilisant le procédé de CESE étant préalablement construites de façon dispersée géographiquement à travers pays et continents.
